**Europäisches Patentamt**

**European Patent Office**

**Office européen des brevets**

(19)

(11) Veröffentlichungsnummer : **0 354 238 B1**

## (12) EUROPÄISCHE PATENTSCHRIFT

(45) Veröffentlichungstag der Patentschrift :
**16.09.92 Patentblatt 92/38**

(21) Anmeldenummer : **89902033.3**

(22) Anmeldetag : **02.02.89**

(86) Internationale Anmeldenummer :
**PCT/EP89/00096**

(87) Internationale Veröffentlichungsnummer :
**WO 89/07055 10.08.89 Gazette 89/18**

(51) Int. Cl.⁵ : **B60G 17/00,** G01L 1/20, G01L 5/00

---

(54) **ELASTISCHE VERBINDUNGSVORRICHTUNG, INSBESONDERE MIT INTEGRIERTER KRAFTMESSEINRICHTUNG UND EIN VERFAHREN ZU DEREN HERSTELLUNG.**

---

(30) Priorität : **02.02.88 DE 8801249 U**

(43) Veröffentlichungstag der Anmeldung :
**14.02.90 Patentblatt 90/07**

(45) Bekanntmachung des Hinweises auf die
Patenterteilung :
**16.09.92 Patentblatt 92/38**

(84) Benannte Vertragsstaaten :
**AT BE CH DE FR GB IT LI NL SE**

(56) Entgegenhaltungen :
**EP-A- 0 230 315**
**WO-A-87/02129**
**US-A- 4 175 429**
**US-A- 4 644 805**

(73) Patentinhaber : **Pfister GmbH**
**Stätzlinger Strasse 70**
**W-8900 Augsburg (DE)**

(72) Erfinder : **HÄFNER, Hans, Wilhelm**
**Fichtenweg 15**
**W-8890 Aichach-Walchshofen (DE)**

(74) Vertreter : **Kahler, Kurt, Dipl.-Ing.**
**Patentanwälte Kahler & Käck Gerberstrasse 3**
**Postfach 1249**
**W-8948 Mindelheim (DE)**

---

Jouve, 18, rue Saint-Denis, 75001 PARIS

**Beschreibung**

Gebiet der Erfindung:

Die Erfindung betrifft eine als Kraftmeßvorrichtung ausgestaltete elastische verbindungsvorrichtung und ein verfahren zu deren Herstellung gemäß den oberbegrifflichen Merkmalen des Patentanspruches 1 bzw. 12.

Stand der Technik:

In der Internationalen Patentanmeldung WO 87/021 29 sind derartige elastische verbindungen beschrieben, bei der in elastomerem Material, das zwischen den verbundenen-Teilen angeordnet ist, mindestens ein Kraft-, Druck- oder Drehmomentsensor angeordnet ist. Insbesondere wird die Anordnung an einem Federbein beschrieben, wobei die Kraftmeßeinrichtung jedoch eine große Bauhöhe einnimmt und Montage- und Wartungsarbeiten aufwendig durchzuführen sind. Zudem ist es oft erforderlich, durch derartige elastische verbindungen Leitungen oder dgl. zu führen.

Weiterhin ist aus der US-PS 4,770,050 eine Meßvorrichtung bekannt, wobei im Boden eines topfförmigen Außenteiles eine zentrale Öffnung vorgesehen ist, in die ein Drucksensor nach Aushärtung des Elastomers eingesetzt und mit Schrauben befestigt wird. Dadurch gelangt der Drucksensor in direkten Kontakt mit der Elastomerschicht.

Obwohl der austauschbare Drucksensor bereits vor dem Einbau kalibriert und kompensiert ist, hat sich gezeigt, daß nach Austausch des Drucksensors oder sonstiger Meßwandler die Meßanzeige bei gleicher Last teilweise starke Abweichungenaufwies. Eine Ursache für diese ungenügende Wiederholgenauigkeit ist in Verunreinigungen oder Einschlüssen in der Kontaktfläche zwischen Elastomer und Drucksensor zu sehen, so daß der Einbau des Sensors höchste Sauberkeit verlangt. Neben diesem Nachteil der ungenügenden Meßgenauigkeit, insbesondere bei Austausch des Drucksensors in staubiger Atmosphäre wie z.B. in Werkstätten, gestaltet sich der Einbau des Drucksensors relativ aufwendig, da zunächst der Drucksensor eingesetzt wird, und dann mittels eines Befestigungsringes und mehrerer Schrauben im dem Abstützteil fixiert wird.

Erfindungsgegenstand:

Demzufolge liegt der Erfindung die Aufgabe zugrunde, eine als Kraftmeßvorrichtung ausgestaltete elastische verbindungsvorrichtung und ein verfahren für die Herstellung einer derartigen elastischen verbindungsvorrichtung anzugeben, bei der ein einfacherer Einbau bzw. Austauschbarkeit und Meßwerterfassung mit hoher Wiederholgenauigkeit erreicht wird.

Diese Aufgabe wird gelöst durch eine elastische verbindungsvorrichtung mit den Merkmalen des Patentanspruches 1, und ein verfahren mit den Merkmalen des Patentanspruches 12.

Mittels der Durchgangsöffnung im rohrförmigen Innenteil können Leitungen, Wellen, Seilzüge hindurchgeführt werden und starre Teile wie z.B. Kolbenstangen eines Federbeins in gut zugängliche Weise daran befestigt werden. Für den bevorzugten Anwendungsfall der Kraftmeßvorrichtung in einem Kraftfahrzeug, insbesondere an der Federbeinhaltung einer Achse, wird vorgeschlagen, daß das topfartige Außenteil und das kolbenförmige Innenteil lediglich eine ringförmige, mit Elastomer gefüllte gegenseitige Kontaktfläche aufweisen, deren Zentrum eine Durchlaßöffnung für die Federbein-Kolbenslange aufweist. Damit kann die Kolbenstange des Federbeines ebenso wie der Sensor von oben her in gut zugänglicher Weise in bzw. an der Kraftmeßvorrichtung zu deren Komplettierung befestigt werden. Diese gute Zugänglichkeit ist neben dem Einbau bei der Neuproduktion am Fließband auch für spätere Wartungs- und Austauscharbeiten in Werkstätten von besonderer Bedeutung. Zudem wird durch die zentrale Durchlaßöffnung in der Kraftmeßzelle und die in vorteilhafter Ausgestaltung vorgesehene exzentrische Anordnung des zugehörigen Sensors in dem verbleibenden Ring innerhalb des Federbeindoms die Bauhöhe und der Befestigungsaufwand der Kraftmeßvorrichtung erheblich reduziert, wie dies im Vergleich zu genannten Stand der Technik deutlich wird. Durch den schmalen, zylindrischen Spalt ergibt sich eine exakte Führung und Fixierung, sowie durch die gebildete Stufe eine große, stabile Abstützfläche.

Gemäß dem Verfahren zur Herstellung der Kraftmeßvorrichtung durch Einbau oder Austauschen eines seitlich angeordneten Druck/Kraftsensors an einer Kraftmeßvorrichtung wird zunächst Flüssigkeit in die Einfüllöffnung eingefüllt und anschließend der Sensor zusammen mit dem Sensorhalter in die Einfüllöffnung eingesetzt, insbesondere eingeschraubt. Durch das Öl in dem Zwischenraum zwischen Sensor und Elastomerschicht kommen selbst größere Staubkörner zwischen Elastomer und Sensor nicht zur Wirkung, sondern werden vom Öl umschlossen. Damit ist ein Austausch des Drucksensors nicht an absolut saubere Werkstattbedingungen gebunden. Auch Lufteinschlüsse oder dergleichen werden sicher vermieden, da der Sensor bzw. Sensorhalter soweit in die Öffnung eingesetzt wird, daß die eingebrachte Flüssigkeitsmenge gerade ausreicht, um an den Drucksensor zu gelangen, bzw. der Drucksensor soweit eingeschraubt wird, bis Öl an der Einschraubstelle austritt. Dies gewährleistet eine sichere Übertragung der auf dem Elastomer angreifenden Last und Weiterleitung an den Sensor ohne dazwischen liegende Fehlstellen und damit hohe Wiederholgenauigkeit.

Durch die Schaffung des Zwischenraumes zwischen Sensor und Elastomer und die vorgeschlagene vollständige Füllung mit einem inkompressiblen Übertragungsmedium, insbesondere Silikonöl, wird die Handhabung der Kraftmeßvorrichtung insgesamt erleichtert. Somit kann die Fertigstellung der Kraftmeßvorrichtung durch Einbau des Sensors auch in Werkstätten ohne Reinraumbedingungen erfolgen, sowie ein ggf. notwendiger Austausch der Sensoren ohne besondere Anforderungen an die Sauberkeit durchgeführt werden. Ein Auswechseln des Federbeines bzw. des Stoßdämpfers wird somit durch die von oben her zugängliche Federbeinbefestigung ohne gesonderten Ausbau der Kraftmeßzelle möglich.

Kurze Beschreibung der Zeichnungen:

Weitere vorteilhafte Ausgestaltungen der Erfindung sind Gegenstand der Unteransprüche und in der nachfolgenden Beschreibung eines Ausführungsbeispiels näher erläutert. Die Zeichnung zeigt in:

Fig. 1 einen Querschnitt durch eine elastische Verbindung an einem Federbeindom eines Kraftfahrzeuges mit eingebauter Kraftmeßvorrichtung;

Fig. 2 eine vergrößerte Darstellung gemäß Fig. 1 in abgewandelter Ausführung;

Fig. 3 eine weitere Ausführung gemäß Fig. 2;

Fig. 4 eine abgewandelte Ausführung gemäß Fig. 1.

Beste Art, die Erfindung auszuführen:

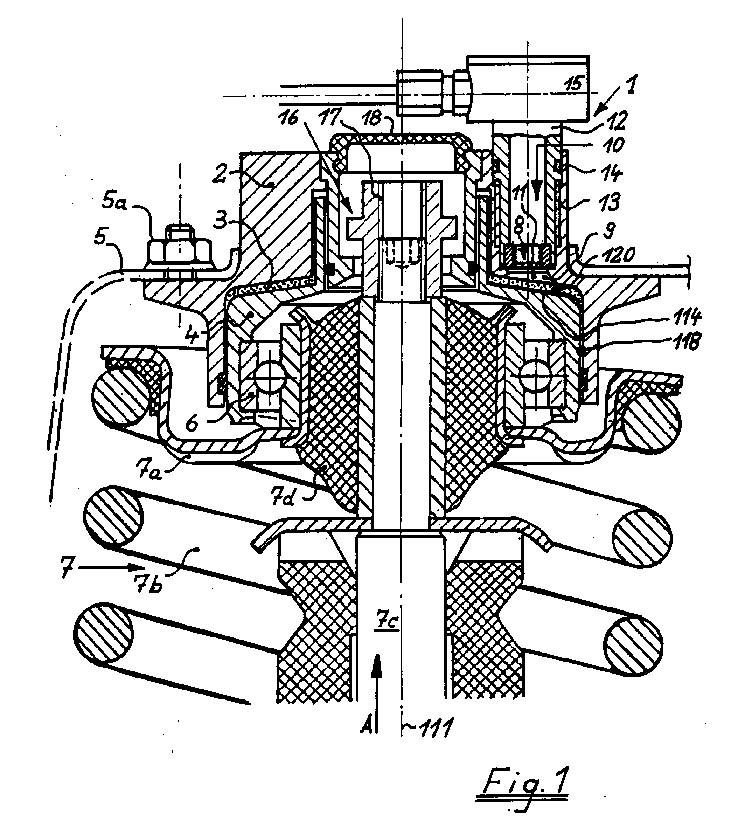

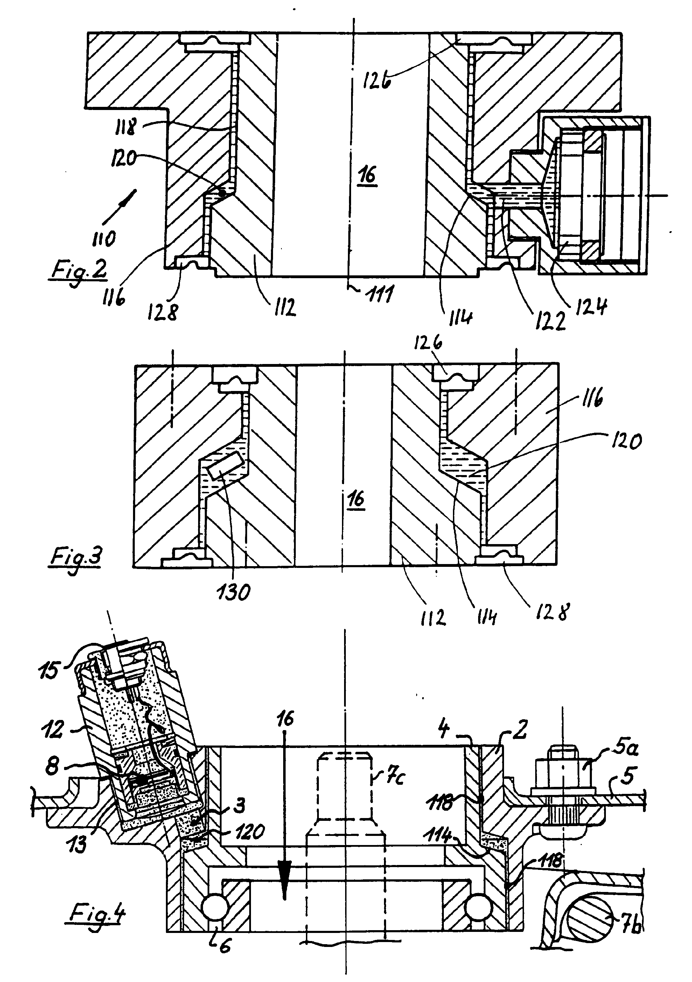

In Fig. 1 ist eine elastische Verbindung als Kraftmeßeinrichtung 1 in einem Federbeindom 5 eines Kraftfahrzeuges mittels Schrauben 5a eingebaut. Die Kraftmeßeinrichtung 1 besteht im wesentlichen aus einem topfförmigen Außenteil 2, das direkt mit dem Federbeindom 5 verbunden ist. Innerhalb des Außenteiles 2 ist ein kolbenartiges Innenteil 4 angeordnet, wobei der zwischen den beiden Teilen 2 und 4 gebildete Ringspalt von einer elastomeren Masse 3, insbesondere Silikon ausgefüllt ist. Innerhalb des erfindungsgemäß mit einer Durchgangsöffnung 16 rohrförmig ausgebildeten Innenteils 4 ist hier ein Lager 6 vorgesehen, an dem das Federbein 7 drehbar gelagert ist. Hierbei handelt es sich um die Ausführung für eine lenkbare Achse, also hier die Vorderachse eines PKWs. Das Federbein 7 besteht im wesentlichen aus einem oberen Federteller 7a, an dem eine Schraubenfeder 7b abgestützt ist, sowie dem Stoßdämpfer, dessen oberer Teil durch eine Kolbenstange 7c dargestellt ist. Die Kolbenstange 7c stützt sich über eine Lagerbuchse 7d an dem Lager 6 ab und ist über eine Schraubverbindung 17 am oberen Ende im Federbeindom 5 gehaltert. Die Schraubverbindung 17 ist dabei von oben her zugänglich innerhalb einer zentralen Durchgangsöffnung 16 innerhalb des Außenteiles 2 und des Innenteiles 4 von oben her erreichbar. Zur Abdichtung ist die Schraubverbindung 17 und die Durchlaßöffnung 16 durch eine Abdeckkappe 18 abgeschlossen.

In dem über den Federbeindom 5 hinausragenden Teil des im wesentlichen ringförmigen Außenteiles 2 ist hier rechts von der Mittelachse 111 der Kraftmeßvorrichtung 1 ein Sensor 8 in einer Stichbohrung 10 im Außenteil 2 untergebracht. Durch diese Stichbohrung 10 besteht ein Zugriff zu der hier etwa rechtwinkligen Stufe 114, einem Ringspalt 118 und dem darin aufgebrachten Elastomer 3. Bei Belastung der Kraftmeßvorrichtung 1, hier durch die Radlast im stationären Zustand oder während der Fahrt von der Krafteinleitungsseite A her, wird das Elastomer 3 durch das Innenteil 4 insbesondere in der Stufe 114 belastet, wobei dieses einen mit dem Elastomer 3 in Verbindung stehenden Sensor 8 beaufschlagt.

Der Sensor 8 ist hier membranartig ausgeführt und bildet in bevorzugter Ausgestaltung zum Elastomer 3 hin einen Zwischenraum 9 aus, der im komplettierten Zustand der Kraftmeßvorrichtung 1 mit einer inkompressiblen Übertragungsflüssigkeit 11, insbesondere Silikonöl gefüllt ist. Die Übertragungsflüssigkeit 11 wird vor dem Einbau des Sensors 8 durch die Stichbohrung 10 eingefüllt, jedoch kann auch eine gesonderte Einfüllöffnung vorgesehen sein. Nach dem Einfüllen der Übertragungsflüssigkeit 11 wird der Sensor 8 zusammen mit einem Sensorhalter 12 in die Stichbohrung 10 eingesetzt. Hierzu ist ein Befestigungsgewinde 13 vorgesehen, in das der Sensorhalter 12 eingeschraubt wird. Durch einen Dichtungsring 14 ist der Sensorhalter 12 gegenüber äußeren Einflüssen abgedichtet. Zur Meßwertverarbeitung und Weiterleitung der durch den Sensor 8 erfaßten Meßwerte sind im Inneren des Sensorhalters 12 Verbindungskabel zum verstärker 15 geführt, der die Meßwerte, hier die Radlast des jeweiligen Vorderrades erfaßt und aufbereitet, sowie durch die angedeutete Leitung beispielsweise einem Bordcomputer zuführt.

In Fig. 2 ist in einer elastischen Verbindung 110 der Sensor zur Unterscheidung mit 124 bezeichnet und vergrößert dargestellt. Der Sensor 124 ist hier membranartig ausgeführt und arbeitet beispielsweise auf dem piezoresistiven Meßprinzip um die Druckwerte zu erfassen. Als Sensor 124 können jedoch beispielsweise auch Dehnmeßstreifen oder andere bekannte Meßwandler vorgesehen sein. Der Sensor 124 ist hier im Gegensatz zu Fig. 1 durch eine seitliche Stichbohrung 122 waagrecht zur Stufe 114 hin ausgerichtet. Die Stufe 114, die sich durch die Durchmessererweiterung des Innenteils 112 ergibt, ist hier angeschrägt ausgeführt und bildet einen Zwischenraum 120.

Dieses Innenteil 112 mit zentraler Durchgangsöffnung 16 ist von einem Außenteil 116 umgeben, deren Kontur komplementär zur Außenmantelfläche des Innenteils 112 ist, wobei ein schmaler umlaufender Spalt 118 belassen ist, der mit vorzugsweise blasenfreiem elastomeren Material (entspricht in Fig. 1 dem Elastomer 3) gefüllt ist. Im Bereich der Stufe 114 des Innenteils 112 ist der umlaufende Spalt etwas erweitert, so daß sich ein konisch umlaufender Zwischenraum 120 ergibt, der über eine ebenfalls vorzugsweise mit elastomerem Material gefüllte Stichbohrung 122 mit der Krafteinleitungsseite eines Kraft- oder Drucksensors 124 in Verbindung steht, der seitlich an das Außenteil 116 angesetzt ist.

Der umlaufende, mit elastomerem Material gefüllte Spalt 118 ist vorzugsweise durch je einen oberen und unteren Ring 126 bzw. 128 abgedeckt, so daß das elastomere Material 120 vor äußeren Einflüssen geschützt ist.

Fig. 3 zeigt eine gegenüber Fig. 2 noch vereinfachte Ausführungsform, bei der in dem erweiterten Zwischenraum 120 in dem elastomeren Material mindestens ein Drucksensor 130 unmittelbar eingebettet ist. Der Zwischenraum 120 ist dabei bevorzugt - in Höhenrichtung gesehen - mittig zwischen oberen und unterem engem Ringspalt 118 (vgl. Fig. 4) angeordnet, wodurch sich eine exakte Fixierung der daran angreifenden Teile ergibt.

Der besondere Vorteil dieser elastischen Verbindung 110 besteht darin, daß in der zentralen Durchgangsöffnung 16 beliebige Leitungen, Seilzüge, Wellen, Achsen oder dergleichen verlegt oder Fluide hindurchgeleitet werden können. Das Innenteil 4,112 und das Außenteil 2,116 können Endabschnitte irgendwelcher anderer Teile Sein, beispielsweise wie in Fig. 4 das Innenteil 4 zugleich ein Lagerring des Lagers 6 bilden. Alternativ dazu kann das Außenteil 2,116 und das Innenteil 4,112 an je ein anderes Teil als Fortsetzung angeschraubt oder anderweitig verbunden sein.

Ferner stellt die in den Fig. 2 bzw. 3 dargestellte Anordnung an sich eine Kraft- oder Druckmeßzelle dar, wie sie in Fig. 1 angewendet wird

Wird bei vertikal abgestütztem Innenteil 112 auf das Außenteil 116 von oben eine Kraft ausgeübt, so wird diese praktisch reibungsfrei auf den Kraft- bzw. Drucksensor 124 bzw 130 übertragen. Querkräfte werden auf Grund des in dem schmalen Ringspalt 118 befindlichen elastomeren Materials vollkommen abgeleitet.

Es sei erwähnt, daß insbesondere bei der Ausführungsform nach Fig. 3 umfangsmäßig verteilt mehrere Drucksensoren 130 in den Zwischenraum 120 in elastomerem Material eingebettet angeordnet sein können, die über entsprechende elektrische Leitungen, die beispielsweise in das Innere des Innenteils 112 geführt sein können, (oder auch drahtlos) mit einer Auswertevorrichtung in Verbindung stehen können.

Eine weitere Modifikation der gezeigten elastischen Verbindung bestände darin, bei der Ausführungsform nach Fig. 1 den Kraft - oder Drucksensor im Inneren des Rohres anzubringen, wobei dann eine Stichbohrung vom Zwischenraum 120 durch die Wand des Innenteils 112 geführt würde.

In Fig. 4 ist die Anordnung gemäß Fig. 1 in angewandter Ausführung gezeigt und mit gleichen Bezugszeichen bezeichnet. Dabei bildet das Innenteil 4 zugleich als integrales Bestandteil den Außenring des Lagers 6 zur drehbaren Befestigung des durch die Federwicklung 7b schematisch dargestellten Federbeines 7. Die Stichbohrung 10 zum Anschluß an den erweiterten Zwischenraum 120 an der Stufe 114 und zur Aufnahme des Sensors 8 und dessen Sensorhalters 12 mittels des Gewindes 13 ist hier senkrecht zur Neigung der Stufe 114 ausgerichtet. Hierdurch ergibt sich eine direkte Beaufschlagung des Sensors 8 und durch dessen Neigung eine weitere Bauhöhenreduzierung am Federbeindom 5. Das Federbein 7 bzw. dessen Kolbenstange 7c ist dabei dank der Durchgangsöffnung 16 ebenso wie der Sensor 8 gesondert für Montage- oder Wartungsarbeiten sehr leicht demontierbar ohne daß ohnehin kaum verschleißbehaftete Innen- und Außenteil -Baueinheit 2,4, mit den Schrauben 5a lösen zu müssen.

Aschließend sei darauf hingewiesen, daß als elastomeres Material bevorzugt Gummi, insbesondere Naturkautschuk verwendet wird. Auch ein Silikonkautschuk oder andere elastomere Stoffe, wie sie beispielsweise in der WO 87/021929 erwähnt sind, können Verwendung finden. Wichtig ist, daß das elastomere Material fest an den Kontaktflächen haftet, bevorzugt an diesen vulkanisiert ist. Soweit eine hohe Meßgenauigkeit erforderlich ist, sollte das elastomere Material blasenfrei sein.

Von besonderer Bedeutung für die Erfindung ist auch die in Fig. 4 veranschaulichte Einheit, in der die Kraft- bzw. Druckmeßvorrichtung 8 integriert ist. Diese als Sensorhalter 12 bezeichnete Einheit hat die Form einer Kraftfahrzeugzündkerze mit einem Außengewinde, das in ein Innengewinde der Einsetzöffnung mit derartig viel Spiel einschraubbar ist, daß Übertragungsflüssigkeit, die vor dem Einschrauben eingefüllt wurde, durch die Gewindegänge herausgedrückt werden kann. In der Endstellung wird ein weiteres Austreten von Übertragungsflüssigkeit durch eine Dichtung verhindert, die entweder an der Stirnseite des Gehäuses oder an einem beschlag am inneren Ende des Gewindes vorgesehen ist. In dem Gehäuse ist die Kraft- bzw. Druckmeßvorrichtung (8) fixiert; auch sind die für die Auswertung, Kalibrierung, Verstärkung und den Abgleich erforderlichen elektrischen Schaltungen, etwa in Form integrierter Schaltungen untergebracht, so daß der Einheit ein starkes, der anliegenden Kraft bzw. herrschenden Druck entsprechendes Signal entnommen werden kann.

**Patentansprüche**

1. Als Kraftmeßvorrichtung ausgestaltete elastische Verbindungsvorrichtung zwischen einem starren Innenteil und einem starren Außenteil, zwischen denen im verbleibenden engen Ringspalt elastomeres Material vorgesehen ist, das in Kraft- bzw. Druckübertragungskontakt mit einem Kraft- bzw. Drucksensor steht, dadurch gekennzeichnet, daß das Innenteil (4, 112) eine Durchgangsöffnung (16) aufweist und im Außendurchmesser unter Bildung einer Stufe (114) radial erweitert ist, und das Innere des Außenteils (2, 116) eine Kontur komplementär zur Außenmantelfläche des Innenteils (112) aufweist, wobei der zwischen dem Innen- und Außenteil (2, 4) gebildete Ringspalt im Bereich der Stufe (114) axial erweitert ist, so daß sich ein umlaufender Zwischenraum (120) ergibt, der ebenfalls mit dem elastomeren Material gefüllt ist, das den Kraft- oder Drucksensor (8, 120) beaufschlagt.

2. Elastische Verbindungsvorrichtung nach Anspruch 1, dadurch gekennzeichnet, daß in dem Außenteil (2,116) bzw. dem Innenteil (4,112) eine Stichbohrung (10,122) angebracht ist, die mit der Kraft- bzw. Druckeinleitungsseite des Kraft- bzw. Drucksensors (8,124) in Verbindung steht.

3. Elastische Verbindungsvorrichtung nach Anspruch 1 oder 2, dadurch gekennzeichnet, daß der Kraft- bzw. Drucksensor (124) seitlich in das Außenteil (116) eingelassen ist.

4. Elastische Verbindungsvorrichtung nach Anspruch 1, dadurch gekennzeichnet, daß mindestens ein Drucksensor (130) in dem umlaufenden Zwischenraum (120) in dem elastomeren Material eingebettet ist.

5. Elastische Verbindungsvorrichtung nach einem der Ansprüche 1 bis 4, dadurch gekennzeichnet, daß die radialen Flächen der Stufe (114) gegenüber der Mittelachse (111) schräg angeordnet sind.

6. Elastische Verbindungsvorrichtung wenigstens nach Anspruch 1, dadurch gekennzeichnet, daß die Stichbohrung (10) parallel oder senkrecht zur Mittelachse (111) des Innenteils (112) ausgerichtet ist.

7. Elastische Verbindungsvorrichtung wenigstens nach Anspruch 1, dadurch gekennzeichnet, daß der Kraft- bzw. Druckmeßsensor (8) in die Stichbohrung (10) einsetzbar, insbesondere einschraubbar ist und ein eventueller Zwischenraum (9) von einer Übertragungsflüssigkeit (11) vollkommen gefüllt ist.

8. Elastische Verbindungsvorrichtung nach Anspruch 7, dadurch gekennzeichnet, daß der Kraft- bzw. Druckmeßsensor (8) mit einem Gehäuse (12) ausgestattet ist, dessen eines Ende mit einem Außengewinde versehen ist, das ein gewisses Spiel bezüglich eines Innengewindes der Stichbohrung aufweist, so daß überschüssige Übertragungsflüssigkeit (11) beim Einschrauben austreten kann, wobei eine Dichtung vorgesehen ist, die in eingeschraubter Stellung ein weiteres Austreten von Übertragungsflüssigkeit (11) über die Gewindeverbindung verhindert.

9. Elastische Verbindungsvorrichtung wenigstens nach Anspruch 1, dadurch gekennzeichnet, daß der Kraft- bzw. Drucksensor (8) in einer nach Art einer Kraftfahrzeugzündkerze ausgebildeten eigenen, auswechselbaren Einheit untergebracht ist, die auch die elektrischen Schaltungen für den Abgleich, die Kalibrierung, Auswertung und/oder Verstärkung des vom Kraft- bzw. Drucksensors (8) erzeugten elektrischen Signals beinhaltet.

10. Elastische Verbindungsvorrichtung wenigstens nach Anspruch 1, dadurch gekennzeichnet, daß die Kraftmeßvorrichtung (1) an einem Federbein (7) angeordnet ist, deren Kolbenstange (7c) in der zentralen Durchlaßöffnung (16) des Innenteils (4) befestigt ist und der Sensor (8) exzentrisch zur Mittelachse (111) und lösbar im Außenteil (2) zwischen Kolbenstange (7c) und dem Federbeindom (5) des Federbeins (7) angeordnet ist.

**11.** Elastische Verbindungsvorrichtung nach Anspruch 10, dadurch gekennzeichnet, daß das Innenteil (4) zugleich als Außenring eines Drehlagers (6) an einer lenkbaren Fahrzeugachse ausgebildet ist.

**12.** Verfahren zum Ansetzen eines Kraft- bzw. Drucksensors an eine ein Druckübertragungsmedium einthaltende elastische Verbindungsvorrichtung nach Anspruch 1 mit den Schritten :
– Ausbilden einer Einsetzöffnung in der Vorrichtung, in die der Kraft- bzw. Drucksensor einpaßbar ist;
– Einfüllen von Übertragungsflüssigkeit in einen eventuellen Zwischenraum zwischen dem Druckübertragungsmedium und dem Kraft- bzw. Drucksensor;
– Einsetzen des Kraft- bzw. Drucksensors in die Einsetzöffnung und
– Festlegen darin, wobei die Übertragungsflüssigkeit den Zwischenraum vollkommen ausfüllt.

## Claims

**1.** Resilient connecting device formed as a force measuring apparatus and arranged between a rigid inner part and a rigid outer part, elastomeric material being provided in the narrow annular gap remaining therebetween, the elastomeric material being in force or pressure transmitting contact, respectively, to a force or pressure sensor, respectively, characterized in that the inner part (4, 112) is provided with a passage (16) and is radially expanded in the outer diameter forming a step (114), and that the interior of the outer part (2, 116) has a contour complementary to the outer peripheral surface of the inner part (112) with the annular gap formed between the inner and outer part (2, 4) in the region of the step (114) being axially expanded such that there is formed a circular intermediate space (120) filled with elastomeric material as well, acting onto the force or pressure sensor (8, 120).

**2.** Resilient connecting device of claim 1, characterized in that in the outer part (2, 116) or the inner part (4, 112) respectively, there is formed a bore (10, 122) connected to the force or pressure introduction side of the force or pressure sensor (8, 124), respectively.

**3.** Resilient connecting device of claim 1 or 2, characterized in that the force or pressure sensor (124), respectively, is laterally inserted into the outer part (116).

**4.** Resilient connecting device of claim 1, characterized in that at least one pressure sensor (130) is embedded in the elastomeric material in the circular intermediate space (120).

**5.** Resilient connecting device of any of claims 1 to 4, characterized in that the radial surfaces of the step (114) are inclined in respect of the central axis (111).

**6.** Resilient connecting device of at least claim 1, characterized in that the bore (10) is aligned in parallel or vertically in respect of the central axis (111) of the inner part (112).

**7.** Resilient connecting device of at least claim 1, characterized in that the force or pressure measuring sensor (8), respectively, is insertable, in particular screwable into the bore (10) and that an eventual intermediate space (9) is completely filled by a transmission liquid (11).

**8.** Resilient connecting device of claim 7, characterized in that the force or pressure measuring sensor (8), respectivley, is provided with a housing (12) one end of which being provided with an external threading having a certain loose in respect of an internal threading of the bore such that excessive transmission liquid (11) may exit upon screwing in, with a sealing being provided preventing further exiting of transmission liquid (11) through the threaded connection in the screwed-in position.

**9.** Resilient connecting device of at least claim 1, characterized in that the force or pressure sensor (8), respectively, is incorporated in a separate, exchangeable unit of the kind of an automotive spark plug and having incorporated therein as well the electric circuits for compensation, calibration, evaluation and/or amplification of,the electrical signal generated by the force or pressure sensor (8), respectively.

**10.** Resilient connecting device at least of claim 1, characterized in that the force measuring device (1) is arranged in a spring leg (7) the piston plunger (7c) thereof being fixed in the central passage (16) of the inner part (4) and that the sensor (8) is eccentrical in respect of the central axis (111) and releasable in the outer part (2) between the piston plunger (7c) and the spring leg dome (5) of the spring leg (7).

**11.** Resilient connecting device of claim 10, characterized in that the inner part (4) is simultaneously formed as the external ring of a rotational bearing (6) at a steerable vehicle axis.

**12.** Method for applying a force or pressure sensor, respectively, to a resilient connecting device containing a pressure transmission medium, according to claim 1, with the steps:
– forming an insert opening in the device into which the force or pressure sensor, respectively, may be fitted;
– filling-in of transmission liquid into an eventual intermediate space between the pressure transmission medium and the force or pressure sensor, respectively;
– inserting the force or pressure sensor, respectively, into the insert opening; and
– fixing therein, with the transmission liquid completely filling the intermediate space.

**Revendications**

**1.** Dispositif de liaison élastique réalisé sous la forme d'un dispositif dynamométrique entre une partie intérieure rigide et une partie extérieure rigide entre lesquelles un matériau élastomère est prévu dans l'interstice annulaire étroit restant, en étant en contact de transmission de la force ou, respectivement, de la pression avec un capteur de force ou, respectivement, de pression, caractérisé par le fait que la partie intérieure (4, 112) présente une ouverture de passage (16), qu'elle est élargie radialement dans son diamètre extérieur en formant un gradin (114), et que l'intérieur de la partie extérieure (2, 116) présente un contour complémentaire de celui de la surface latérale extérieure de la partie intérieure (112), cependant que l'interstice annulaire formé entre les parties intérieure et extérieure (2, 4) est élargi axialement dans la région du gradin (114), de sorte qu'il se forme un espace intermédiaire annulaire (120) qui est également rempli du matériau élastomère agissant sur le capteur de force ou de pression (8, 124).

**2.** Dispositif de liaison élastique selon la revendication 1, caractérisé par le fait qu'est ménagé dans la partie extérieure (2, 116) ou dans la partie intérieure (4, 112), respectivement, un perçage de branchement (10, 122) qui est en communication avec le côté d'introduction de la force ou, respectivement, de la pression, du capteur de force ou, respectivement, de pression (8, 124).

**3.** Dispositif de liaison élastique selon la revendication 1 ou 2, caractérisé par le fait que le capteur de force ou, respectivement, de pression (124) est inséré latéralement dans la partie extérieure (116).

**4.** Dispositif de liaison élastique selon la revendication 1, caractérisé par le fait qu'au moins un capteur de pression (130) est noyé dans le matériau élastomère dans l'espace intermédiaire annulaire (120).

**5.** Dispositif de liaison élastique selon l'une des revendications 1 à 4, caractérisé par le fait que les surfaces radiales du gradin (114) sont disposées obliquement par rapport à l'axe central (111).

**6.** Dispositif de liaison élastique au moins selon la revendication 1, caractérisé par le fait que le perçage de branchement (10) est orienté parallèlement ou perpendiculairement à l'axe central (111) de la partie intérieure (112).

**7.** Dispositif de liaison élastique au moins selon la revendication 1, caractérisé par le fait que le capteur de force ou, respectivement, de pression (8) peut être inséré dans le perçage de branchement (10), en y étant en particulier vissé, et qu'un espace intermédiaire éventuel (9) est rempli complètement par un liquide de transmission (11).

**8.** Dispositif de liaison élastique selon la revendication 7, caractérisé par le fait que le capteur de force ou, respectivement, de pression (8) est équipé d'un logement (12) dont l'une des extrémités est pourvue d'un filetage extérieur qui présente un certain jeu par rapport à un filetage intérieur du perçage de branchement, de sorte que le liquide de transmission en excès (11) peut sortir lors du vissage, cependant qu'il est prévu une étanchéité qui, dans la position vissée, empêche que le liquide de transmission (11) ne continue à sortir à travers la liaison filetée.

**9.** Dispositif de liaison élastique au moins selon la revendication 1, caractérisé par le fait que le capteur de force ou, respectivement, de pression (8) est logé dans une unité interchangeable propre qui est réalisée à la manière d'une bougie d'allumage de véhicule automobile et qui contient aussi les circuits électriques destinés à l'égalisation, au calibrage, à l'exploitation et/ou à l'amplification du signal électrique engendré par le capteur de force ou, respectivement, de pression (8).

10. Dispositif de liaison élastique au moins selon la revendication 1, caractérisé par le fait que le dispositif dynamométrique (1) est disposé sur une jambe de suspension (7) dont la tige de piston (7c) est fixée dans l'ouverture centrale de passage (16) de la partie intérieure (4), et que le capteur (8) est disposé, de manière excentrée par rapport à l'axe central (111), et d'une manière amovible, dans la partie extérieure (2), entre la tige de piston (7c) et la cuvette de jambe de suspension (5) de la jambe de suspension (7).

11. Dispositif de liaison élastique selon la revendication 10, caractérisé par le fait que la partie intérieure (4) est réalisée en même temps sous la forme de la bague extérieure d'un palier (6) sur un essieu orientable de véhicule

12. Procédé pour poser un capteur de force ou, respectivement, de pression sur un dispositif de liaison élastique contenant un fluide de transmission de la pression selon la revendication 1, comprenant les étapes suivantes :
   – Réalisation dans le dispositif d'une ouverture d'insertion dans laquelle le capteur de force ou, respectivement, de pression peut être emboîté ;
   – Remplissage, au moyen d'un liquide de transmission, d'un espace intermédiaire éventuel entre le fluide de transmission de la pression et le capteur de force ou, respectivement, de pression ;
   – Insertion du capteur de force ou, respectivement, de pression dans l'ouverture d'insertion ; et :
   – Fixation dans celle-ci, le liquide de transmission remplissant complètement l'espace intermédiaire.

_Fig.1_

Fig. 2

Fig. 3

Fig. 4